# EUROPÄISCHE PATENTSCHRIFT

(11) **EP 2 147 836 B1**
(45) Veröffentlichungstag und Bekanntmachung des Hinweises auf die Patenterteilung: **23.02.2011**
(21) Anmeldenummer: 08013442.2
(22) Anmeldetag: 25.07.2008
(51) Int. Cl.: B60S 1/08

(54) **Steuerung für Scheibenwischermotor**
Control for window wiper motor
Commande pour moteur d'essuie-glace

(43) Veröffentlichungstag der Anmeldung: 27.01.2010
(73) Patentinhaber: Delphi Technologies, Inc., Troy, Michigan 48007 (US)
(72) Erfinder: Rosenthal, Thorsten, 45468 Mülheim (DE)
(74) Vertreter: Denton, Michael John

(56) Entgegenhaltungen:
- DE-A1- 4 417 371
- DE-A1- 10 245 662
- FR-A- 2 718 258
- FR-A- 2 867 736
- US-A- 5 959 817

## Beschreibung

Die vorliegende Erfindung betrifft Steuerungen für Scheibenwischanlagen von Kraftfahrzeugen und insbesondere ein Steuerungsverfahren und eine Motorsteuerung für einen Scheibenwischermotor.

Zum Betreiben von Scheibenwischeranlagen wird üblicherweise ein kommutierter Gleichstrommotor verwendet, dessen Motorwelle über ein Untersetzungsgetriebe und ein optionales Gestänge mit mindestens einem Scheibenwischer der Scheibenwischanlage gekoppelt ist. Dabei kann sich der Gleichstrommotor immer in die gleiche Drehrichtung drehen (nicht reversierender Betrieb) oder aber die Drehrichtung umkehren, wenn der/die Scheibenwischer die Bewegungsrichtung umkehren sollen (reversierender Betrieb).

Ähnliche Gleichstrommotoren werden in Kraftfahrzeugen beispielsweise bei Fensterhebern und Schiebedächern verwendet. Bei diesen Anwendungen ist eine möglichst präzise Positionsbestimmung der Motorwelle und damit des Fensters bzw. Schiebedachs notwendig, um einen zuverlässigen Schutz gegen ein unbeabsichtigtes Einklemmen beispielsweise einer Hand beim Schließen eines Fensters bzw. eines Schiebedachs zu gewährleisten. Zu diesem Zweck wird bei diesen Anwendungen üblicherweise eine Welligkeit eines Ankerstroms des Gleichstrommotors ausgewertet, um daraus eine möglichst genaue Position der Motorwelle zu ermitteln.

Das Ankerstromsignal eines kommutierten Gleichstrommotors umfasst neben einem Gleichanteil einen diesen überlagernden Wechselanteil, der sich durch das Zusammenwirken von Magnet bzw. Magnetfeld, Ankerwicklung und Kommutator ergibt. Dabei basiert die Welligkeit des Ankerstromsignals auf einer jeweiligen kurzzeitigen Änderung der induzierten Spannung. Da die in dem Ankerstromsignal enthaltenen Stromspitzen oder -rippel bei einer Umdrehung des Ankers in einer der Anzahl der Kollektorlamellen entsprechenden Häufigkeit auftreten, kann eine Zählung der Stromrippel Aufschluss über die aktuelle Drehstellung des Ankers bzw. der damit gekoppelten Motorwelle geben.

Zum Betreiben von Scheibenwischeranlagen wird üblicherweise mindestens ein Positionssensor verwendet, um die Parkposition des mindestens einen Scheibenwischers feststellen zu können. Bei einem reversierenden Betrieb wird zudem Information über die Umkehrposition des mindestens einen Scheibenwischers benötigt, um die Drehrichtung des Gleichstrommotors zu einem geeigneten Zeitpunkt umzuschalten. Um diese zu erhalten, können ein weiterer Positionssensor, eine Zeitsteuerung oder andere geeignete Verfahren verwendet werden, wodurch sich jedoch die Komplexität und damit die Kosten für die Herstellung, Montage und Wartung der Scheibenwischanlage erhöhen können. Im Rahmen dieser Anmeldung werden im Folgenden Gleichstrommotoren im nicht reversierenden Betrieb betrachtet.

In FR-A-2 867 736 ist ein Verfahren zur Detektion des Durchgangs eines Scheibenwischers durch eine seiner Mittel- oder Extrempositionen offenbart, bei dem der Verlauf eines Versorgungsstroms eines zugehörigen Scheibenwischermotors überwacht wird, wobei minimale Stromwerte Extrempositionen des Scheibenwischers entsprechen und maximale Stromwerte der Mittelposition des Scheibenwischers entsprechen.

Es ist die Aufgabe der Erfindung, eine Motorsteuerung für eine Scheibenwischeranlage der eingangs genannten Art so weiterzubilden, dass diese kostengünstiger hergestellt werden kann.

Diese Aufgabe wird durch die Merkmale des Anspruchs 1 gelöst.

Ein erfindungsgemäßes Steuerungsverfahren für einen nicht reversierenden kommutierten Scheibenwischermotor, der einen Gleichstrommotor mit einem Stator, einem Anker und einer mit dem Anker gekoppelten Motorwelle aufweist, bestimmt eine Parkposition der Motorwelle, die einer Parkposition mindestens eines mit der Motorwelle gekoppelten Scheibenwischers entspricht, indem es die Anzahl der Umdrehungen der Motorwelle ermittelt.

Damit ermöglicht es das erfindungsgemäße Steuerungsverfahren, auf einen Positionssensor zu verzichten, der bisher benötigt wurde, um eine Parkposition des mindestens einen Scheibenwischers zu ermitteln, wodurch Kosten, Montageaufwand und Gewicht eingespart und die Zuverlässigkeit eines Scheibenwischersystems, welches das erfindungsgemäße Steuerungsverfahren einsetzt, erhöht werden kann.

Die Anzahl der Umdrehungen der Motorwelle wird erfindungsgemäß durch ein Auswerten der Welligkeit oder der Rippel eines Ankerstroms des Gleichstrommotors ermittelt.

Das Auswerten bzw. Zählen der Rippel des Ankerstroms ermöglicht eine Berechnung der Anzahl der Umdrehungen, welche die Motorwelle ausführt. Daraus kann basierend auf einer mechanischen Kopplung zwischen der Motorwelle und dem mindestens einen Scheibenwischer die aktuelle Position des Scheibenwischers berechnet werden. Zudem kann berechnet werden, wann der Scheibenwischer seine Parkposition erreicht, ohne dass dafür ein zusätzlicher Positionssensor erforderlich ist.

Bei einer bevorzugten Ausführungsform wird aus dem Verlauf des Ankerstroms des Gleichstrommotors eine weitere signifikante Position des mindestens einen Scheibenwischers abgeleitet. Dabei kann es sich um die Umkehrposition des mindestens einen Scheibenwischers oder eine andere signifikante Position handeln, die von einer Scheibenwischermechanik herrührt. Von dieser Position aus kann das Steuerungsverfahren durch ein Zählen der Rippel des Ankerstroms leicht die Parkposition bestimmen.

Es kann vorteilhaft sein, die zusätzliche Position der Motorwelle zum Kompensieren von Abweichungen zu verwenden, die bei der Ermittlung der Parkposition entstehen können.

Da die Erfassung von Stromrippeln Störungen unterliegen kann und eine begrenzte Auflösung bietet, ist damit zu rechnen, dass die errechnete Position der Motorwelle und des mindestens einen Scheibenwischers im Lauf der Zeit von der tatsächlichen Position derselben abweichen kann. Störungen können beispielsweise durch ein Nichtdetektieren eines Rippels (Fehlrippel) oder eine Doppelzählung eines Rippels (Doppelrippel) auftreten. Insbesondere bei einem nicht reversierenden Betrieb, bei welchem der Motor über keine Referenzposition (z.B. eine Parkposition des Motors) verfügt, ist die Kenntnis bzw. Detektion der zusätzlichen signifikanten Position hilfreich, um die durch eventuelle Fehl- oder Doppelrippel und/oder durch die begrenzte Auflösung verursachten Abweichungen kompensieren zu können. Damit kann diese Ausführungsform des erfindungsgemäßen Steuerungsverfahrens zudem zumindest teilweise auf komplizierte Fehlererkennungstechniken zur Detektion von Fehl- und Doppelrippeln verzichten, was für eine Scheibenwischeranlage aus Kosten- und Komplexitätsgründen vorteilhaft ist.

Zudem kann das erfindungsgemäße Steuerungsverfahren bei einer Ausführungsform eine Laufzeit zwischen der zusätzlichen signifikanten Position und der Parkposition ermitteln.

Mit der Laufzeit kann das erfindungsgemäße Steuerungsverfahren auf einfache Weise prüfen, ob die für diese Laufzeit ermittelte Rippelzahl plausibel ist.

Basierend auf dieser Laufzeit kann das Steuerungsverfahren bei weiteren Ausführungsformen auch zur Regelung der Motordrehzahl bzw. der Geschwindigkeit des mindestens einen Scheibenwischers verwendet werden und/oder herangezogen werden, um Blockaden des Scheibenwischersysterns, beispielsweise aufgrund von Vereisung, einfach zu detektieren und eine dadurch drohende Überlastung des Gleichstrommotors zu vermeiden.

Bei einer weiteren Ausführungsform verwendet das erfindungsgemäße Steuerungsverfahren pulsweitenmodulierte (PWM) Spannungssignale, um den Gleichstrommotor anzusteuern, womit eine stufenlose Geschwindigkeitsregelung des mindestens einen Scheibenwischers ermöglicht wird.

Eine alternative Ausführungsform des erfindungsgemäßen Steuerungsverfahrens verwendet Gleichstromsignale zur Ansteuerung des Gleichstrommotors. Der für diese Ausführungsform benötigte Hardwareaufwand ist gering und ermöglicht eine stufenförmige Geschwindigkeitsregelung des mindestens einen Scheibenwischers.

Nachfolgend wird die Erfindung anhand einer beispielhaften Ausführungsform unter Bezugnahme auf die beigefügte Zeichnung genauer erläutert, in der:
- Fig. 1: ein Blockschaltbild einer ersten Ausführungsform der erfin- dungsgemäßen Motorsteuerung zeigt;
- Fig. 2: ein Anschlussschaltbild für einen Scheibenwischermotor nach dem Stand der Technik zeigt;
- Fig. 3a: eine schematische Darstellung eines Stromverlaufs mit Rip- peln und Amplitudenschwankungen zeigt;
- Fig. 3b: eine Messkurve des Stromverlaufs mit Rippeln und Amplitu- denschwankungen zeigt; und
- Fig. 4: ein Blockschaltbild einer alternativen Ausführungsform der erfindungsgemäßen Motorsteuerung zeigt.

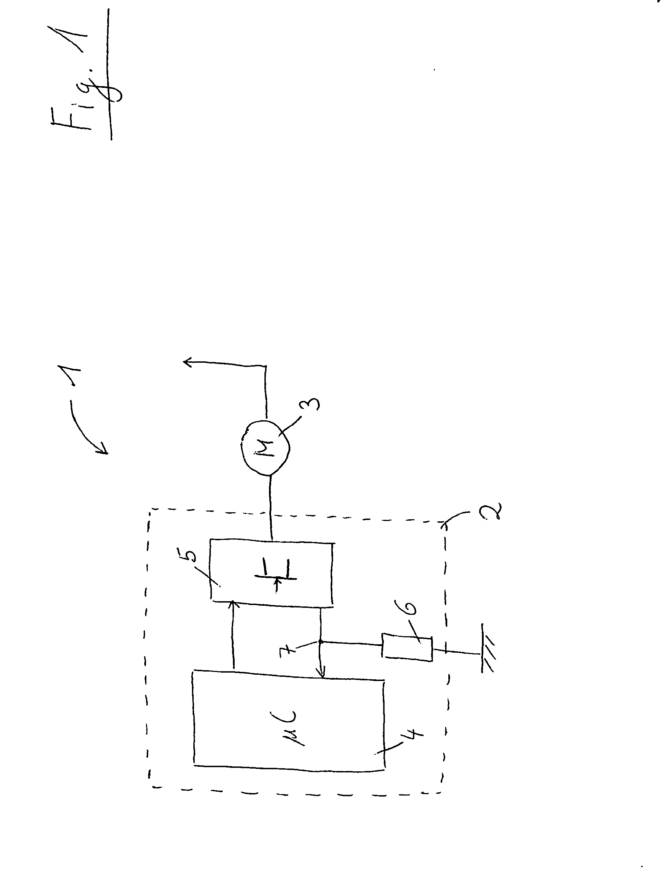

Das in Fig. 1 gezeigte Blockschaltbild zeigt schematisch eine Motorsteuerung 1, die auf einer Steuerungsplatine 2 realisiert ist, an welcher ein zu steuernder Gleichstrommotor 3 angeschlossen ist. Ein Mikrocontroller 4, der auf der Steuerungsplatine 2 angeordnet ist, steuert einen Schalter 5, der in diesem Beispiel als ein MOSFET-Schalter ausgebildet ist.

Bei der gezeigten Ausführungsform erfolgt die Versorgung des Gleichstrommotors 3 mit Energie dadurch, dass der Mikrocontroller 4 ein pulsweitenmoduliertes Spannungssignal an den MOSFET-Schalter 5 ausgibt. Gemäß dem Tastverhältnis dieses PWM-Signals, also dem Verhältnis der Einschaltzeiten zu den Ausschaltzeiten innerhalb einer Zeitspanne wird der MOSFET-Schalter 5 ein- und ausgeschaltet, wodurch in bekannter Weise die Amplitude einer aus dem PWM-Signal resultierenden mittleren Gleichspannung festgelegt wird, mit welcher der Gleichstrommotor 3 versorgt wird. Dabei kann eine Drehzahl des Gleichstrommotors 3 über die Größe der Amplitude der am Gleichstrommotor 3 anliegenden Gleichspannung in bekannter Weise gesteuert werden.

Zur Erfassung des Ankerstroms des Gleichstrommotors 3 ist ein niederohmiger Sense-Widerstand 6 auf der Steuerungsplatine 2 vorgesehen. Dabei wird von dem Mikrocontroller 4 ein Spannungsabfall über den Sense-Widerstand 6 an dem Potential-Messpunkt 7 erfasst. Über das Ohm sche Gesetz kann aus dem erfassten Spannungsabfall bzw. Potentialunterschied zwischen dem Potential-Messpunkt 7 und Masse und dem bekannten Widerstandswert des Sense-Widerstands 6 auf die Größe des Stroms geschlossen werden, der durch den Sense-Widerstand 6 fließt. Dieser ist im Wesentlichen gleich dem Ankerstrom des Gleichstrommotors 3. Das Erfassen des Spannungsabfalls an dem Sense-Widerstand 6 kann auf analoge Weise erfolgen; bevorzugt ist es bei der Verwendung des Mikrocontrollers 4 jedoch, die erfassten Werte über nicht dargestellte Analog/Digital-Wandler in digitale Werte umzusetzen. Die Analog/DigitalWandler können durch separate Bauteile realisiert sein, sind aber bevorzugt in dem Mikrocontroller 4 integriert. Ein dem Sense-Widerstand 6 entsprechender Widerstand kann alternativ in dem MOSFET-Schalter 5 integriert sein, um die Anzahl diskreter Bausteine auf der Steuerungsplatine 2 zu minimieren.

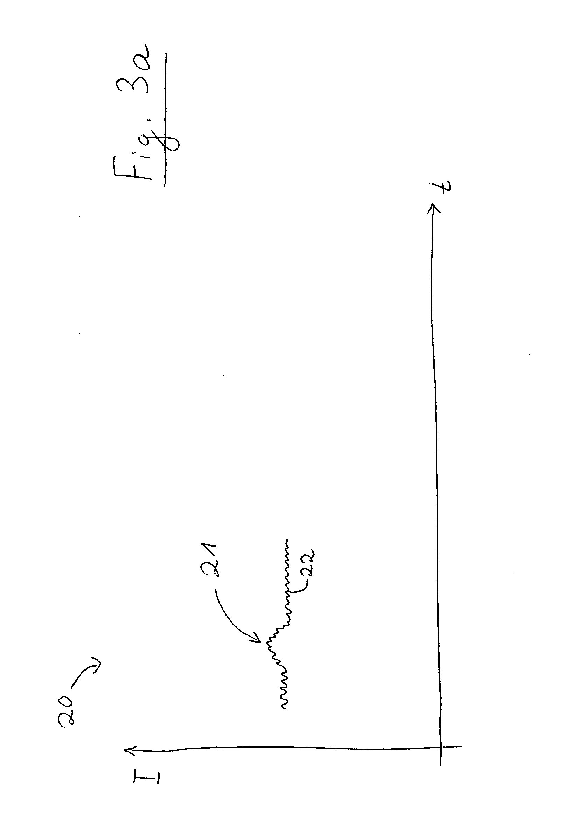

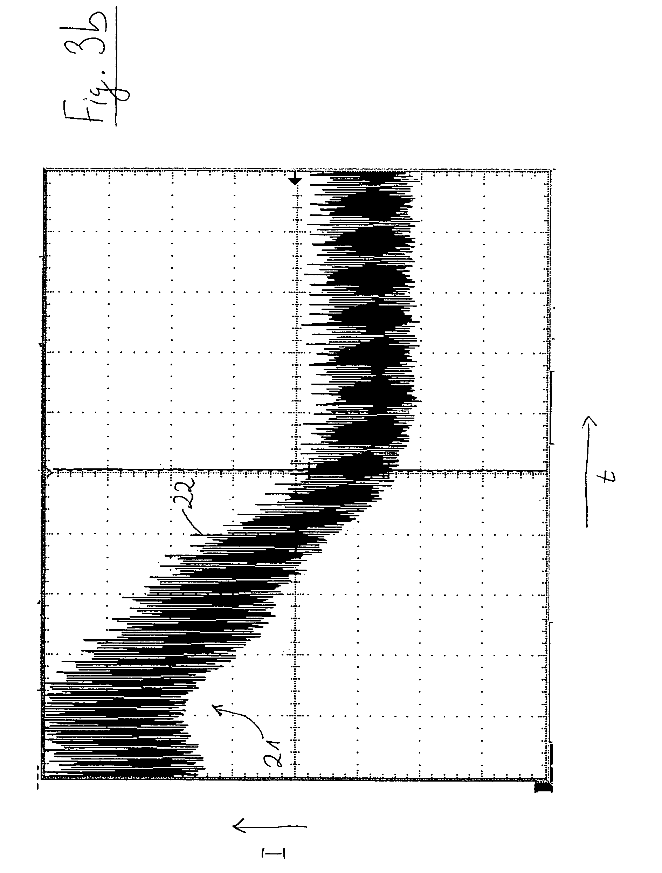

Die voranstehend beschriebene Stromerfassungsschaltung mit Hilfe des Sense-Widerstands 6 dient dazu, die Amplitude des Stroms und damit auch deren Schwankungen und die Stromspitzen zu erfassen, die als Rippel identifiziert werden. Die kurzzeitigen Stromspitzen bzw. Rippel werden herangezogen, um die aktuelle Position der Motorwelle des Gleichstrommotors 3 zu bestimmen. Wie in der Beschreibungseinleitung bereits ausgeführt ist, werden erkannte Rippel gezählt, um die aktuelle Position zu bestimmen. In Verbindung mit Fig. 3a und 3b werden nachfolgend Details zu dieser Vorgehensweise erläutert.

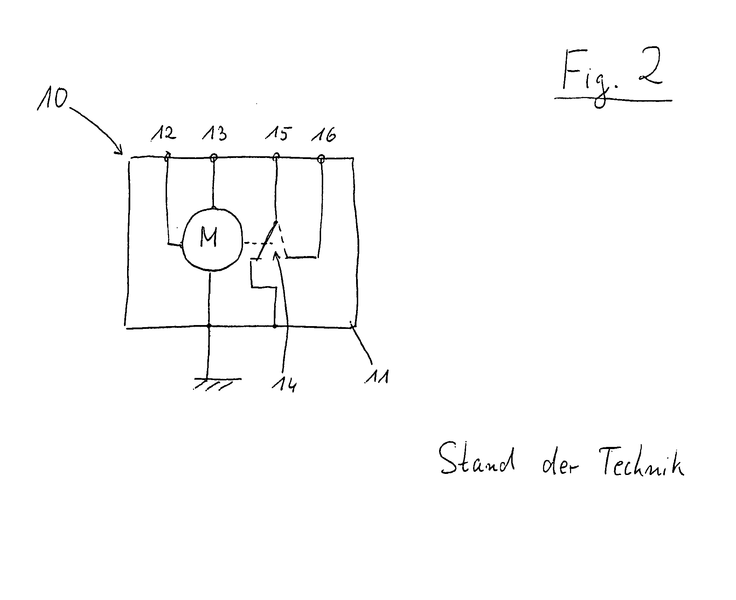

Fig. 2 zeigt ein Anschlussschaltbild 10 für einen Scheibenwischermotor 11 nach Stand der Technik. Dabei verfügt der gezeigte Scheibenwischermotor 11 über zwei Anschlüsse 12, 13 für zwei verschiedene Motordrehzahlen sowie einen Schaltkontakt 14 zur Erkennung einer Parkposition. Dieser kann als ein Leistungsschalter ausgelegt sein, so dass der Motor sich selbst mit Spannung versorgen kann, bis er die Parkposition erreicht, falls der Bediener die Scheibenwischeranlage ausschaltet. Oder er kann als ein Signalkontakt ausgelegt sein, so dass eine angeschlossene Elektronik die Parkposition erkennen kann. Im Falle der Ausprägung als Leistungsschalter sind zwei zusätzliche Anschlüsse 15, 16 vonnöten, und bei der Ausprägung als Signalkontakt genügt ein zusätzlicher Anschluss 15.

Das Anschlussschaltbild 10 von Fig. 2 bietet mit zwei verschiedenen Drehzahlen des Motors und einer Parkpositionserkennung eine im Wesentlichen gleiche Funktionalität wie die erfindungsgemäße Motorsteuerung 1 von Fig. 1, wobei bei der Motorsteuerung 1 von Fig. 1 zudem eine stufenlose Drehzahlregelung des Gleichstrommotors 3 möglich ist. Während in Fig. 1 zu diesem Zweck eine Steuerungsplatine 2 mit einem Mikrocontroller 4 und einigen wenigen Bauteilen 5, 6 benötigt wird, die über eine einzige Leitung mit dem Gleichstrommotor 3 verbunden ist, benötigt das Anschlussschaltbild von Fig. 2 einen Schalter 14 und mindestens drei Leitungen zu den Anschlüssen 12, 13, 15 und/oder 16. Im Vergleich zu Fig. 2 ist bei Fig. 1 die Anzahl der Leitungen und damit die Anzahl notwendiger Kontakte minimiert und der Schalter 14 eliminiert, was neben Gewichts- und Platzersparnissen sowie Vorteilen bei der Montage auch zu einer erhöhten Zuverlässigkeit des Systems von Fig. 1 im Vergleich mit dem System von Fig. 2 führt.

In Fig. 3a ist ein schematischer beispielhafter Verlauf 20 eines Ankerstroms I des Gleichstrommotors 3 gezeigt, der von dem Mikrocontroller 4 über einen Spannungsabfall an dem Sense-Widerstand 6 erfasst und digitalisiert wird, wie im Zusammenhang mit Fig. 1 bereits erläutert wurde. Der Amplitudenverlauf des Ankerstroms I zeigt eine relativ hochfrequente Schwingung mit kleiner Amplitude, die den Rippeln 22 entspricht. Ein beispielhafter Gleichstrommotor kann eine spannungsabhängige Drehzahl von etwa 2.000 bis 3.000 U/min sowie 10 Kollektorlamellen aufweisen, so dass ein derartiger Motor etwa 20.000 bis 30.000 Rippel pro Minute erzeugt, was einer Rippelfrequenz von etwa 333 bis 500 Hz entspricht.

Zudem zeigt der Amplitudenverlauf des Ankerstroms I eine niederfrequente Schwankung an der Stelle 21, die bei dieser Ausführungsform der Umkehrposition mindestens eines Scheibenwischers entspricht, der mit dem Gleichstrommotor 3 von Fig. 1 gekoppelt ist.

Aus Fig. 3a sowie der in Fig. 3b dargestellten Messkurve ist ersichtlich, dass die erfindungsgemäße Motorsteuerung 1 von Fig. 1 über den Sense-Widerstand 6 oder einen entsprechenden internen Widerstand des MOSFET-Schalters 5 zwei verschiedene Informationen erfasst. Zum einen die Rippel 22, deren Anzahl von der Motorsteuerung 1 gezählt wird und die ein Maß für die augenblickliche Position der Motorwelle des Gleichstrommotors 3 sind. Und zum anderen niederfrequente Schwankungen der gemessenen Stromamplituden, die einen Umkehrpunkt oder andere, durch die Mechanik der Scheibenwischeranlage verursachte signifikante Positionen im Stromverlauf des Ankerstroms anzeigen. Durch eine Kalibrierung, die im Zuge der Entwicklung der erfindungsgemäßen Motorsteuerung erfolgt, wird eine derartige signifikante Position, die bei der dargestellten Ausführungsform die Umkehrposition des mindestens einen Scheibenwischers ist, in eine Beziehung zu der Parkposition des Scheibenwischermotors gesetzt, sodass der Motorsteuerung 1 bekannt ist, wie viele Rippel von der signifikanten Position bis zur Parkposition auftreten sollten. Auf der Grundlage dieser Kalibrierung kann die erfindungsgemäße Motorsteuerung Fehler kompensieren, die durch ein Auftreten von Fehlrippeln oder Doppelrippeln oder aufgrund der begrenzten Auflösung verursacht werden.

Des Weiteren nutzt die erfindungsgemäße Motorsteuerung die voranstehend erläuterten Informationen betreffs Umkehrposition und Rippelzahl dazu, eine Laufzeit des Scheibenwischers zu überwachen, um eventuelle Blockaden des mindestens einen Scheibenwischers detektieren zu können, welche beispielsweise durch Vereisung oder ein festsitzendes Scheibenwischergestänge verursacht werden können.

Zu diesem Zweck ermittelt die Motorsteuerung 1 aus der von ihr über PWM-Signale vorgegebenen Spannung, die an den Gleichstrommotor 3 angelegt wird, die daraus resultierende Motordrehzahl und/oder die Anzahl der pro Sekunde mindestens zu erwartenden Rippelsignale. Diese Ermittlung kann durch eine Berechnung oder durch ein Nachschlagen in einer Nachschlagetabelle erfolgen, welche während der Entwicklungsphase des Systems erzeugt wurde. Wenn die tatsächlich gezählten Rippelsignale unter einer so ermittelten Untergrenze liegen, wird eine Blockadesituation detektiert, um Maßnahmen zum Schutz der Scheibenwischeranlage ergreifen zu können. Diese können in einem Abschalten des Gleichstrommotors bestehen, um eine thermische Überlastung des Gleichstrommotors zu vermeiden.

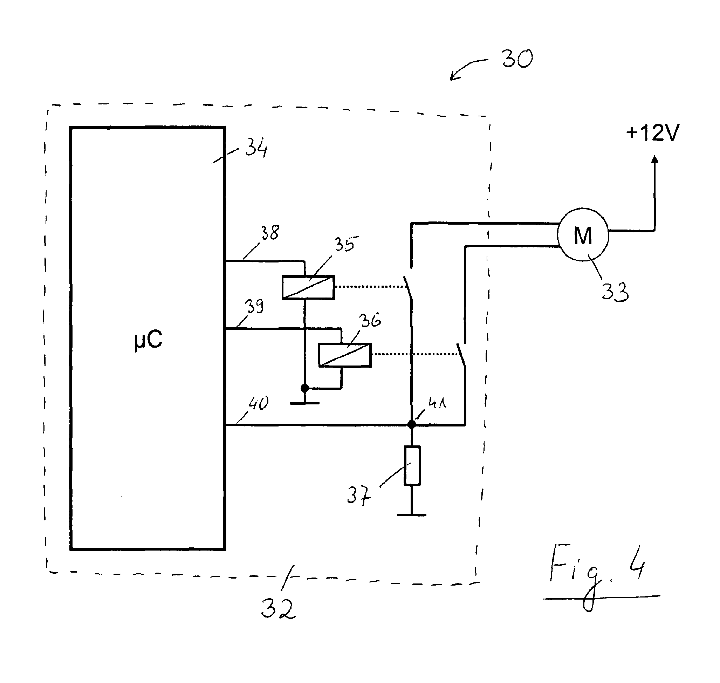

In Fig. 4 ist eine alternative Ausführungsform 30 der erfindungsgemäßen Motorsteuerung dargestellt, die ohne eine PWM-Steuerung des Motors arbeitet. Bei dieser Ausführungsform umfasst eine Steuerungsplatine 32 einen Mikrocontroller 34, zwei Schaltrelais 35 und 36 sowie einen Sense-Widerstand 37. Der Gleichstrommotor 33 ist fest mit einer Versorgungsspannung verbunden, die bei der in Fig. 4 gezeigten Ausführungsform +12VDC beträgt, und weist zwei weitere Anschlüsse auf, die über die Schalter der Schaltrelais 35 bzw. 36 und den Sense-Widerstand 37 mit Masse gekoppelt werden können. Da der Gleichstrommotor 33 intern zwei unterschiedliche Wicklungen umfasst, die über einen Mittelabgriff verbunden sind, der wiederum mit der Versorgungsspannung gekoppelt ist, kann der Motor 33 mit zwei unterschiedlichen Drehzahlen und damit ein zugehöriger Scheibenwischer mit zwei verschiedenen Geschwindigkeiten betrieben werden, je nachdem, welche Wicklung mit Strom beaufschlagt wird.

Der Mikrocontroller 34 kann über eine Schaltleitung 38 das Schaltrelais 35 und den zugehörigen Schalter schließen, wodurch ein Stromfluss durch die erste Wicklung des Gleichstrommotors 33 und den Sense-Widerstand 37 ermöglicht wird. Über eine Messleitung 40 erfasst der Mikrocontroller 34 das Potential am Potential-Messpunkt 41 und kann zusammen mit dem bekannten Widerstandswert des Sense-Widerstands 37 in bekannter Weise den durch den Sense-Widerstand 37 fließenden Strom ermitteln. Auf ähnliche Weise kann der Mikrocontroller über eine Schaltleitung 39 das Schaltrelais 36 und den zugehörigen Schalter schließen, um einen Strom durch die zweite Wicklung des Gleichstrommotors 33 und den Sense-Widerstand 37 fließen zu lassen, der auf die gleiche Weise über den Sense-Widerstand 37 und die Messleitung 40 erfasst werden kann.

Somit erfasst der Mikrocontroller 34 wie voranstehend beschrieben die von dem Gleichstrommotor 33 erzeugten Stromrippel und Amplitudenschwankungen. Basierend auf diesen Werten erfolgt eine Positionsbestimmung oder -korrektur sowie eine Laufzeitüberwachung zur Detektion eventueller Blockadezustände.

### Bezugszeichenliste

- 1: Motorsteuerung
- 2: Steuerungsplatine
- 3: Gleichstrommotor
- 4: Mikrocontroller
- 5: MOSFET-Schalter
- 6: Sense-Widerstand
- 7: Potential-Messpunkt
- 10: Scheibenwischeranschlussschaltbild
- 11: Scheibenwischermotor
- 12,13: Anschlüsse
- 14: Schalter
- 15,16: Anschlüsse
- 20: Ankerstromverlauf
- 21: signifikante Position
- 22: Rippel
- 30: Motorsteuerung
- 32: Steuerungsplatine
- 33: Gleichstrommotor
- 34: Mikrocontroller
- 35, 36: Schaltrelais
- 37: Sense-Widerstand
- 38, 39: Schaltleitungen
- 40: Messleitung
- 41: Potential-Messpunkt

## Patentansprüche

1. Steuerungsverfahren für einen nicht reversierenden kommutierten Scheibenwischermotor, der einen Gleichstrommotor (3, 33) mit einem Stator, einem Anker und einer mit dem Anker gekoppelten Motorwelle umfasst, bei dem zur Bestimmung einer Parkposition der Motorwelle eine Anzahl von Umdrehungen der Motorwelle ermittelt wird,
**dadurch gekennzeichnet, dass**
die Anzahl der Umdrehungen der Motorwelle durch ein Auswerten der Welligkeit oder der Rippel eines Ankerstroms (I) des Gleichstrommotors (3, 33) ermittelt wird.

2. Steuerungsverfahren nach Anspruch 1,
**dadurch gekennzeichnet, dass**
aus einem Ankerstromverlauf (20) des Gleichstrommotors (3, 33) eine zusätzliche, von der Parkposition verschiedene signifikante Position der Motorwelle ermittelt wird.

3. Steuerungsverfahren nach Anspruch 2,
**dadurch gekennzeichnet, dass**
die zusätzliche signifikante Position der Motorwelle verwendet wird, um Abweichungen zu kompensieren, die bei der Ermittlung der Parkposition entstehen können.

4. Steuerungsverfahren nach Anspruch 2 oder 3,
**dadurch gekennzeichnet, dass**
die zusätzliche signifikante Position der Motorwelle verwendet wird, um eine Laufzeit des Gleichstrommotors (3, 33) zwischen der zusätzlichen signifikanten Position und der Parkposition zu ermitteln.

5. Steuerungsverfahren nach Anspruch 4,
**dadurch gekennzeichnet, dass**
die Laufzeit verwendet wird, um Fehler, insbesondere mechanische Blockaden eines mit der Motorwelle gekoppelten Scheibenwischers, zu erkennen.

6. Steuerungsverfahren nach Anspruch 4 oder 5,
**dadurch gekennzeichnet, dass**
die Laufzeit verwendet wird, um die Drehzahl des Gleichstrommotors (3) zu regeln.

7. Steuerungsverfahren nach mindestens einem der Ansprüche 2 bis 6,
**dadurch gekennzeichnet, dass**
die zusätzliche signifikante Position der Motorwelle die Umkehrposition eines Scheibenwischers ist, der mit der Motorwelle gekoppelt ist.

8. Steuerungsverfahren nach mindestens einem der vorherigen Ansprüche,
**dadurch gekennzeichnet, dass**
die Motorsteuerung (1) den Gleichstrommotor (3) durch PWM-Signale steuert.

9. Steuerungsverfahren nach mindestens einem der Ansprüche 1 bis 7,
**dadurch gekennzeichnet, dass**
die Motorsteuerung (30) den Gleichstrommotor (33) durch Gleichspannungssignale steuert.

10. Motorsteuerung (1, 30) für einen nicht reversierenden kommutierten Scheibenwischermotor, der einen Gleichstrommotor (3, 33) mit einem Stator, einem Anker und einer mit dem Anker gekoppelten Motorwelle umfasst, ausgebildet zum Durchführen des Verfahrens nach zumindest einem der Ansprüche 1 bis 9.

## Claims

1. Control method for a non-reversing commutated windshield wiper motor including a direct current motor (3, 33) with a stator, an armature and a motor shaft coupled with the armature, wherein a number of revolutions of the motor shaft are determined for determination of a stand-by position of the motor shaft,
**characterized in that**
the number of revolutions of the motor shaft is determined by evaluating the waviness or the ripples of an armature current (I) of the direct current motor (3, 33).

2. Control method according to claim 1,
**characterized in that**
an additional significant position of the motor shaft, different than the stand-by position, is determined from an armature current profile (20) of the direct current motor (3, 33)

3. Control method according to claim 2,
**characterized in that**
the additional significant position of the motor shaft is used to compensate for deviations which can arise with the determination of the stand-by position.

4. Control method according to claim 2 or 3,
**characterized in that**
the additional significant position of the motor shaft is used to determine a run time of the direct current motor (3, 33) between the additional significant position and the stand-by position.

5. Control method according to claim 4,
**characterized in that**
the run time is used to detect errors, in particular mechanical blockades of a windshield wiper coupled with the motor shaft.

6. Control method according to claim 4 or 5,
**characterized in that**
the run time is used to regulate the rotational speed of the direct current motor (3).

7. Control method according to at least one of the claims 2 to 6,
**characterized in that**
the additional significant position of the motor shaft is the reversal position of a windshield wiper which is coupled with the motor shaft.

8. Control method according to at least one of the previous claims,
**characterized in that**
the motor controller (1) controls the direct current motor (3) with PWM signals.

9. Control method according to at least one of the claims 1 to 7,
**characterized in that**
the motor controller (30) controls the direct current motor (33) with direct current voltage signals.

10. Motor controller (1, 30) for a non-reversing commutated windshield wiper motor including a direct current motor (3, 33) with a stator, an armature and a motor shaft coupled with the armature, adapted for performing the method according to at least one of the claims 1 to 9.

## Revendications

1. Procédé de commande pour un moteur d'essuie-glace commuté non réversible, qui comprend un moteur à courant continu (3, 33) avec un stator, un induit et un arbre de moteur couplé à l'induit, dans lequel on détermine un nombre de révolutions de l'arbre de moteur pour définir une position d'arrêt de l'arbre de moteur,
**caractérisé en ce que** le nombre de révolutions de l'arbre de moteur est déterminé en évaluant les ondulations ou les fluctuations d'un courant d'induit (I) du moteur à courant continu (3, 33).

2. Procédé de commande selon la revendication 1,
**caractérisé en ce que**, à partir d'une évolution du courant d'induit (20) du moteur à courant continu (3, 33) on détermine une position significative additionnelle de l'arbre de moteur, différente de la position d'arrêt.

3. Procédé de commande selon la revendication 2,
**caractérisé en ce que** l'on utilise la position significative additionnelle de l'arbre de moteur pour compenser des écarts qui pourraient se produire lors de la détermination de la position d'arrêt.

4. Procédé de commande selon la revendication 2 ou 3,
**caractérisé en ce que** la position significative additionnelle de l'arbre de moteur est utilisée pour déterminer un temps de fonctionnement du moteur à courant continu (3, 33) entre la position significative additionnelle et la position d'arrêt.

5. Procédé de commande selon la revendication 4,
**caractérisé en ce que** l'on utilise le temps de fonctionnement pour reconnaître des erreurs, en particulier des blocages mécaniques d'un essuie-glace couplé à l'arbre de moteur.

6. Procédé de commande selon la revendication 4 ou 5,
**caractérisé en ce que** l'on utilise le temps de fonctionnement pour réguler la vitesse de rotation du moteur à courant continu (3).

7. Procédé de commande selon l'une au moins des revendications 2 à 6,
**caractérisé en ce que** la position significative additionnelle de l'arbre de moteur est la position d'inversion d'un essuie-glace qui est couplé à l'arbre de moteur.

8. Procédé de commande selon l'une au moins des revendications précédentes,
**caractérisé en ce que** la commande moteur (1) commande le moteur à courant continu (3) par des signaux avec modulation de largeur d'impulsion.

9. Procédé de commande selon l'une au moins des revendications 1 à 7,
**caractérisé en ce que** la commande moteur (30) commande le moteur à courant continu (33) par des signaux à tension continue.

10. Commande moteur (1, 30) pour un moteur d'essuie-glace commuté non réversible, qui comprend un moteur à courant continu (3, 33) avec un stator, un induit et un arbre de moteur couplé à l'induit, réalisé pour mettre en oeuvre le procédé selon l'une au moins des revendications 1 à 9.
